# EUROPÄISCHE PATENTSCHRIFT

(11) **EP 0 528 179 B1**
(45) Veröffentlichungstag und Bekanntmachung des Hinweises auf die Patenterteilung: **08.11.1995**
(21) Anmeldenummer: 92112155.4
(22) Anmeldetag: 16.07.1992
(51) Int. Cl.: B01D 29/07, B01D 27/07

(54) **Flüssigkeitsfilter**
Liquid filter
Filtre à liquides

(30) Priorität: 16.08.1991 DE 4127031
(43) Veröffentlichungstag der Anmeldung: 24.02.1993
(73) Patentinhaber: ROBERT BOSCH GMBH, 70442 Stuttgart (DE)
(72) Erfinder: Projahn, Ulrich, Dr., W-7257 Ditzingen 4 (DE); Scholz, Erich, W-7303 Neuhausen (DE)

(56) Entgegenhaltungen:
- EP-A- 0 385 113
- DE-A- 3 805 138
- FR-A- 1 229 941
- FR-A- 2 598 936

## Beschreibung

### Stand der Technik

Die Erfindung geht aus von einem Flüssigkeitsfilter nach der im Oberbegriff des Anspruchs 1 näher angegebenen Gattung.

Es ist schon ein solches Flüssigkeitsfilter aus der DE-OS 39 06 550 bekannt, bei dem aus einem becherförmigen Gehäuseteil nach dem Abnehmen eines Deckels ein leicht entsorgbares und umweltfreundlich herstellbares Filterelement herausnehmbar ist. Bei diesem Flüssigkeitsfilter wird eine Gehäuseabdichtung nach außen sowie eine erste innere Dichtstelle zwischen Schmutz und Reinseite an einem Mittelrohr eines Deckeleinsatzes mit Hilfe von O-Ringen vorgenommen. Die zweite innere Dichtstelle zwischen Schmutz- und Reinseite wird am Filterelement dadurch erreicht, daß stirnseitig am Wickel an dessen Außenkante eine becherförmige Abdeckhaube dicht festgeklebt ist. Obwohl diese Bauweise eine Reihe von Vorteilen aufweist, kann es in manchen Anwendungsfällen von Nachteil sein, daß die aus thermoplastischem Kunststoff bestehende Abdeckhaube die äußersten Papierwindungen abdichtet und damit wirksame Filterfläche verloren geht. Dies kann sich ungünstig auf die Standzeit des Flüssigkeitsfilters auswirken. Zudem erfordert die Verklebung der Abdeckhaube mit der äußeren stirnseitigen Kante am Wickel, der an sich ein wenig formstabiles Bauelement darstellt, einigen Aufwand in der Fertigung und kann damit die Kostenseite ungünstig beeinflussen. Ferner kann es ungünstig sein, daß für das Filterelement neben der Pappe für das Mittelrohr und dem Filterpapier für den Wickel als drittes Ausgangsmaterial ein thermoplastischer Kunststoff für die Abdeckhaube notwendig ist. Auch ist bei dieser Bauweise die äußere Mantelfläche des Filterelements wenig gegen mechanische, schädigende Einwirkungen bei dessen Lagerhaltung bzw. der Montage geschützt. Ferner erfordert der Wasserablaß an der Abdeckhaube durch das Gehäuseteil hindurch zwei zusätzliche Dichtstellen.

Ferner ist aus der US-PS 40 17 400 ein als Gehäusefilter ausgebildetes Flüssigkeitsfilter bekannt, bei dem als Filterelement eine Toilettenpapierrolle verwendet wird, die auf ein Mittelrohr aufgesteckt wird. Neben einer gesondert ausgebildeten Gehäuseabdichtung werden hier zwei spezielle, im wesentlichen winkelförmige Dichtringe verwendet, die stirnseitig in den Wickel eingedrückt werden und welche die beiden inneren Dichtstellen zwischen Schmutz- und Reinseite bilden. Diese relativ billige Bauweise ergibt eine unsichere Abdichtung, die höheren Anforderungen an das Flüssigkeitsfilter nicht genügt.

### Vorteile der Erfindung

Das erfindungsgemäße Flüssigkeitsfilter mit den kennzeichnenden Merkmalen des Hauptanspruchs hat demgegenüber den Vorteil, daß es eine einfache und kostengünstige Bauweise ermöglicht, die eine relativ umweltfreundliche Herstellung und eine einfache Entsorgung des Filterelements erlaubt. Das Filterelement läßt sich mit einer relativ großen wirksamen Filterfläche herstellen und erreicht deshalb gute Standzeiten. Fernerhin führt das Außenrohr am Filterelement zu einer stabilen Bauweise, die in der Fertigung und in der Montage sowie bei der Lagerhaltung eine leichte Handhabung erlaubt. Bei dem Flüssigkeitsfilter ist kein Entfetten für eine Klebestelle notwendig, so daß eine Verwendung umweltbelastender Lösungsmittel entfällt. Ebenso entfallen hierbei Phenolharzdämpfe, wie sie bei Imprägnierungen auftreten. Ferner läßt sich die Herstellung auch ohne Klebstoffdämpfe ausführen.

Durch die in den Unteransprüchen aufgeführten Maßnahmen sind vorteilhafte Weiterbildungen und Verbesserungen des im Hauptanspruch angegebenen Flüssigkeitsfilters möglich. Besonders vorteilhaft sind Ausführungen nach den Ansprüchen 2 und 3, die eine besonders kostengünstige und einfache Bauweise ermöglichen. Das Filterelement kann dadurch im wesentlichen aus nur zwei Grundmaterialien hergestellt werden, dem Papiermaterial für das äußere und innere Papprohr sowie den Wickel und dem Heißschmelzkleber auf Kunststoffbasis. Zur Entsorgung können daher die verschmutzten bzw. kraftstoffgetränkten Filterelemente rückstandsarm verbrannt werden. Papiermaterial und Heißschmelzkleber lassen sich nicht nur leicht verarbeiten, sondern ermöglichen auch eine besonders dichte, innige und feste Verbindung. Bei einer Ausführungsform nach Anspruch 4 läßt sich eine einfache, wirksame Gehäuseabdichtung erreichen, die sie in besonders günstiger Weise mit einer äußeren Dichtstelle zwischen Schmutz- und Reinseite kombinieren läßt. Eine äußerst einfache, kompakte und kostengünstige Ausbildung der äußeren Dichtstelle zwischen Schmutz- und Reinseite läßt sich bei Ausführungen nach den Ansprüchen 5 und 6 erreichen. Weiterhin ergibt sich eine vorteilhafte und kostengünstige Bauweise, wenn gemäß den Ansprüchen 7 und 8 zwei Dichtfunktionen räumlich miteinander kombiniert werden. Eine äußerst einfache, wirksame und billige Abdichtung läßt sich an der inneren Dichtstelle zwischen Schmutz- und Reinseite erreichen, wenn das Flüssigkeitsfilter nach Anspruch 9 ausgebildet wird. Ferner ist eine Ausführung nach Anspruch 12 zweckmäßig, da sich hierdurch ein stabiles und leicht handhabbares Filterelement herstellen läßt. Weiterhin ist es besonders vorteilhaft, wenn das Flüssigkeitsfilter gemäß Anspruch 13 ausgeführt wird. Auf diese Weise geht durch die Klebestelle zwischen Außenrohr und Wickel keine wirksame Filterfläche verloren, so daß sich besonders gute Standzeitwerte erreichen lassen. Weitere vorteilhafte Ausgestaltungen ergeben sich aus den übrigen Ansprüchen, der Beschreibung sowie der Zeichnung.

### Zeichnung

Vier Ausführungsbeispiele der Erfindung sind in der Zeichnung dargestellt und in der nachfolgenden Beschreibung näher erläutert. Es zeigt Figur 1 einen Längsschnitt durch eine erste Ausführungsform des Flüssigkeitsfilters mit langem Außenrohr, Figur 2 einen Längsschnitt durch eine zweite Ausführungsform mit kurzem Außenrohr und die Figuren 3 und 4 jeweils einen teilweisen Längsschnitt durch eine dritte bzw. vierte Ausführungform des Flüssigkeitsfilters.

### Beschreibung der Ausführungsbeispiele

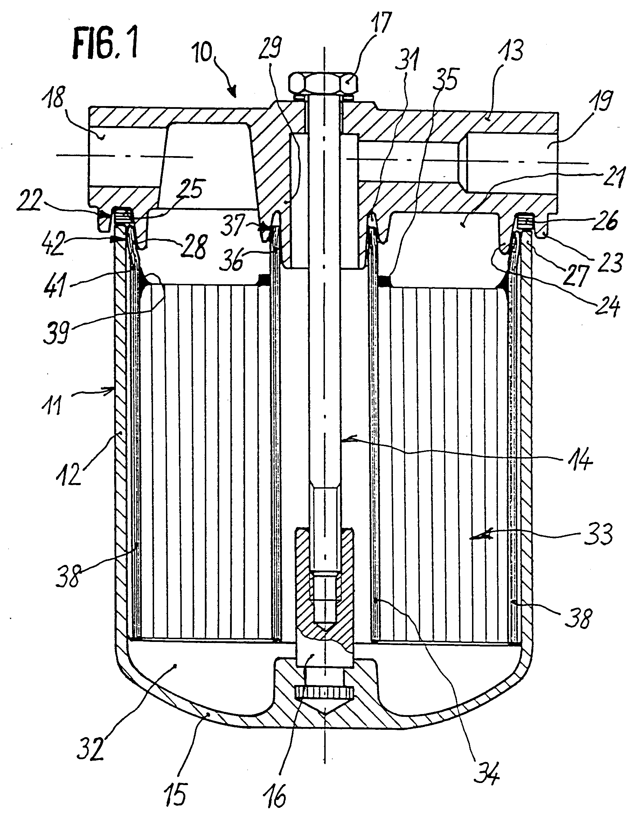

Die Figur 1 zeigt einen Längsschnitt durch ein Flüssigkeitsfilter 10 für Dieselkraftstoff, das als Gehäusefilter ausgebildet ist. Das Flüssigkeitsfilter 10 hat ein Gehäuse 11, das aus einem becherförmigen, metallischen Gehäuseteil 12 und einem Deckel 13 besteht, die durch eine Befestigungseinrichtung 14 lösbar miteinander verbunden sind. Die Befestigungseinrichtung 14 besteht dabei aus einer an einem Boden 15 des Gehäuseteils 12 befestigten Gewindebuchse 16 und einer den Deckel 13 durchdringenden Zentralschraube 17.

In dem relativ flach bauenden Deckel 13 sind auf entgegengesetzten Seiten ein Zulaufanschluß 18 sowie ein Ablaufanschluß 19 ausgebildet. Zur Abdichtung eines Innenraumes 21 im Gehäuse 11 nach außen ist zwischen Deckel 13 und Gehäuseteil 12 eine Gehäuseabdichtung 22 vorgesehen. Zu diesem Zweck weist der Deckel 13 eine zwischen einem äußeren Steg 23 und einem inneren Steg 24 ausgebildete, kreisförmig verlaufende Ringnut 25 auf, in die ein Flachdichtring 26 aus Gummi eingelegt ist und an dem sich das Ende 27 des becherförmigen Gehäuseteils 12 abstützt. Von den zueinander konzentrisch verlaufenden Stegen 23 und 24 ist der innere Steg 24 länger ausgebildet, so daß er das Ende 27 des Gehäuseteils 12 überlappt. Zudem ist der innere Steg 24 auf seiner der Ringnut 25 zugewandten Seite von einer schräg verlaufenden Fläche begrenzt, so daß das achsparallel verlaufende Ende 27 des Gehäuseteils 12 mit dem auskragenden inneren Steg 24 einen konisch ausgebildeten Ringspalt 28 bildet. Dieser konische Ringspalt 28 verjüngt sich zur Ringnut 25 hin und geht unmittelbar in diese über. Etwa auf gleicher axialer Höhe wie der konische Ringspalt 28 ist an einem von der Zentralschraube 17 durchdrungenen, koaxial zu ihr liegenden Ablaufstutzen 29 ein entsprechend konisch ausgebildeter, ringförmig verlaufender Deckelspalt 31 ausgebildet.

Das becherförmige Gehäuseteil 12 weist im Bereich seines Bodens 15 Stützrippen 32 auf, auf denen sich ein im Innenraum 21 des Gehäuses angeordnetes Filterelement 33 abstützt. Das Filterelement 33 ist hier als axial durchströmtes Wickelelement ausgebildet, bei dem um ein zentrales Mittelrohr 34 Filterpapierbahnen in sich bekannter Weise spiralig aufgewickelt sind, wobei unter Beifügung von Dichtmittel zwei zu entgegengesetzten Stirnseiten hin offene Flüssigkeitsräume gebildet werden. Das Mittelrohr 34 ist hier als Papprohr ausgebildet, an dem das Filterpapier in an sich bekannter Weise durch eine Klebestelle 35 abgedichtet wird. Das Mittelrohr 34 weist ein sich in Richtung des Deckels 13 erstreckendes, den eigentlichen Wickel überstehendes rohrförmiges Ende 36 auf, mit dem es in den konischen Deckelspalt 31 hineinragt. Das rohrförmige Ende 36 wird beim Festschrauben des Deckels 13 auf dem becherförmigen Gehäuseteil 12 radial zusammengepreßt und ergibt dabei eine erste, innere Dichtstelle 37 zwischen der Schmutzseite 18 und der Reinseite 19 im Flüssigkeitsfilter 10.

Das Filterelement 33 weist ferner ein Außenrohr 38 auf, das die eigentliche Mantelfläche des Wickels umgibt und durch eine Klebestelle 39 mit dem Wickel dicht und fest verbunden ist. Das Außenrohr 38 ist wie das Mittelrohr 34 als Papprohr ausgebildet und weist die gleiche axiale Länge auf.

Das Außenrohr 38 weist in entsprechender Weise wie das Mittelrohr 34 ein über den Wickel hinausragendes rohrförmiges Ende 41 auf, mit dem es in den konischen Ringspalt 28 ragt. Beim Zusammenbau von Deckel 13 und Gehäuseteil 12 wird auch dieses rohrförmige Ende 41 radial zusammengepreßt und bildet dort eine äußere zweite Dichtstelle 42 zwischen Schmutz- und Reinseite.

Beim Zusammenbau des Flüssigkeitsfilters 10 wird das vorgefertigte Filterelement 33 in das noch offene becherförmige Gehäuseteil 12 eingesetzt, wobei sich das Mittelrohr 34, der Papierwickel selbst sowie das Außenrohr 38 auf den Stützrippen 32 abstützen. Beim Aufsetzen des Deckels 13 werden die Enden 36 und 41 von beiden Papprohren zwangsweise in die konischen Ringspalte 31 bzw. 28 eingeführt und beim Verschrauben der beiden Gehäuseteile jeweils radial so zusammengepreßt, daß ohne zusätzliche Bauelemente die beiden Dichtstellen 37 bzw. 42 zwischen der Schmutz- und der Reinseite entstehen. Die notwendige Pressung kann dabei durch entsprechendes Anziehen der Zentralschraube 17 erreicht werden. Zugleich wird dabei auch die Gehäuseabdichtung 22 in ausreichendem Maße vorgespannt.

Im Betrieb wird das dem Zulauf 18 zuströmende Druckmittel in axialer Richtung durch den Wickel geführt, im Bereich der Stützrippen 32 in das Mittelrohr 34 umgelenkt und strömt über den Ablaufstutzen 29 zum Ablaufanschluß 19. Ein verschmutztes Filterelement 33 besteht lediglich aus dem Papiermaterial von Mittelrohr 34, Außenrohr 38 und dem Wickel sowie aus dem Heißschmelzkleber aus Polyamid. Das Filterelement 33 kann deshalb zur Entsorgung relativ rückstandsarm verbrannt werden.

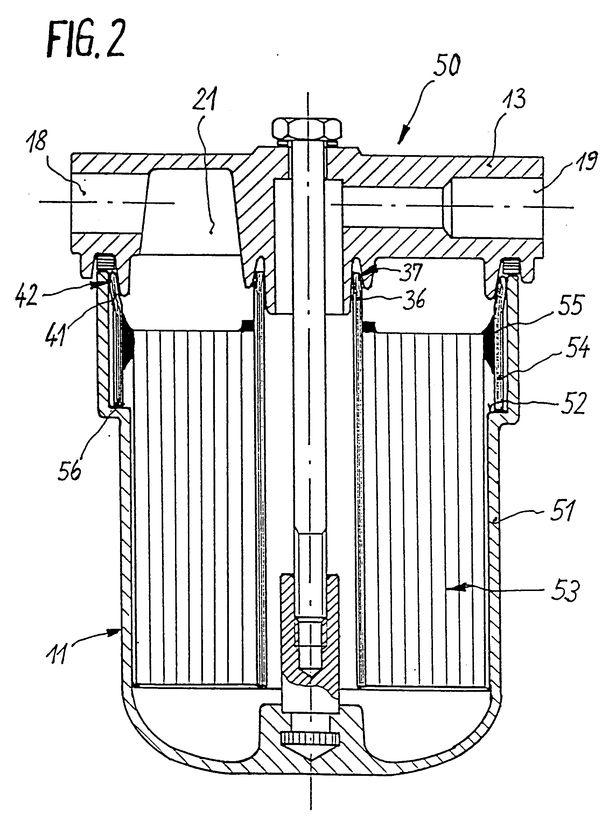

Die Figur 2 zeigt ein zweites Flüssigkeitsfilter 50, das sich von dem Flüssigkeitsfilter 10 nach Figur wie folgt unterscheidet, wobei für gleiche Bauelelemente gleiche Bezugszeichen verwendet werden.

Das Flüssigkeitsfilter 50 weist ein anderes becherförmiges Gehäuseteil 51 auf, das in seiner der offenen Seite zugewandten Hälfte aufgeweitet ist und dadurch einen innen ringförmig umlaufenden Absatz 52 aufweist. Ferner ist im Innenraum 21 des Gehäuses 11 ein anderes Filterelement 53 angeordnet, bei dem die Papprohre nicht mehr gleichlang sind, sondern am Außenumfang des Wickels ein kurzes Außenrohr 54 angeordnet ist. Das Außenrohr 54 ist über eine Klebestelle 55 dicht und fest mit dem eigentlichen Wickel verbunden. Diese Klebestelle 55 kann nun vollständig an der Mantelfläche des Wickels angeordnet werden, so daß nahezu keine wirksame Filterfläche im Wickel verloren geht. Die äußerste Windung des Filterelements 53 kann daher zur Standzeiterhöhung mit beitragen. Während das obere, rohrförmige Ende 41 des kurzen Außenrohrs 54 wie bisher die zweite äußere Dichtstelle 42 zwischen Schmutz- und Reinseite bildet, stützt sich das kurze Außenrohr 54 mit seinem unteren Ende 56 auf dem Absatz 52 ab. Mit dem Filterelement 53 mit kurzem Außenrohr 54 läßt sich somit die Standzeit erhöhen und der Materialaufwand für das Außenrohr 54 verringern.

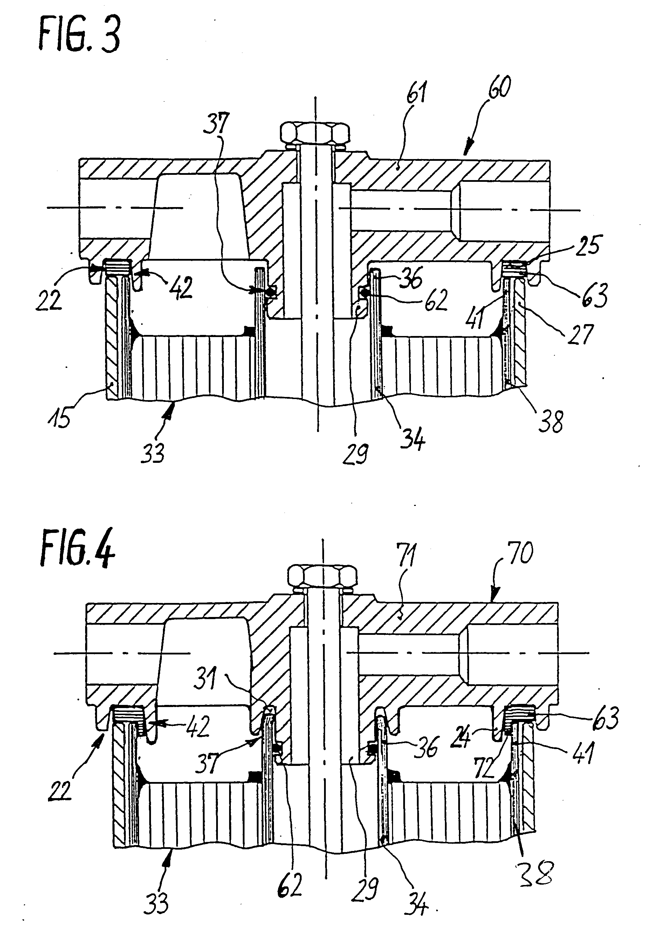

Die Figur 3 zeigt einen teilweisen Längsschnitt durch ein drittes Flüssigkeitsfilter 60, das sich vom ersten Flüssigkeitsfilter 10 nach Figur 1 durch eine andere Art der Abdichtung der Papprohre unterscheidet, wobei im übrigen für gleiche Bauelemente gleiche Bezugszeichen verwendet werden.

Das dritte Flüssigkeitsfilter 60 weist einen anderen Deckel 61 auf, an dessem Ablaufstutzen 29 das rohrförmige Ende 36 des Mittelrohres 34 mit Hilfe eines radial abdichtenden O-Ringes 62 die erste innere Dichtstelle 37 bildet. Ferner ist im Deckel 61 die Ringnut 25 verbreitert und nimmt einen dementsprechend breiteren Abdichtring 63 auf, an dem sich das Ende 27 des becherförmigen Gehäuseteils 12 sowie das rohrförmige Ende 41 des Außenrohrs 38 abstützen. Der Flachdichtring 63 übernimmt auf diese Weise eine Doppelfunktion, indem er zur Ausführung der Gehäuseabdichtung 22 und der zweiten äußeren Dichtstelle 42 zwischen Schmutz- und Reinseite beiträgt. Auch diese Art der Abdichtung der beiden Papprohre 34 und 38 baut besonders einfach und kostengünstig, wobei das Mittelrohr 34 und das Außenrohr 38 im wesentlichen gleichlang ausgebildet werden können und alle drei Dichtstellen im wesentlichen in der gleichen radialen Ebene angeordnet sein können.

Die Figur 4 zeigt einen teilweisen Längsschnitt durch ein viertes Flüssigkeitsfilter 70, das sich vom dritten Flüssigkeitsfilter 60 nach Figur 3 wie folgt unterscheidet, wobei gleiche Bauelemente mit gleichen Bezugszeichen versehen sind.

Das vierte Flüssigkeitsfilter 70 weist einen Deckel 71 auf, an dessem Ablaufstutzen 29 der radial abdichtende O-Ring 62 sowie der konische Deckelspalt 31 zum Einführen des rohrförmigen Endes 36 miteinander kombiniert sind, um so gemeinsam die erste innere Dichtstelle 37 zwischen Schmutz- und Reinseite zu bilden. Durch den Deckelspalt 31 wird zugleich ein Aufweiten des aus Pappe bestehenden Mittelrohrs 34 verhindert, so daß eine besonders sichere Abdichtung erreicht wird. Im Bereich der Gehäusedichtung 22 weist nun der Flachdichtring 63 eine zusätzliche, axial sich erstreckende Dichtlippe 72 auf, welche das rohrförmige Ende 41 des Außenrohres 38 umgreift und somit zwischen dem Außenrohr 38 und dem inneren Steg 24 zu liegen kommt. Auf diese Weise wird die zweite äußere Dichtstelle 42 zwischen der Schmutz- und der Reinseite im Flüssigkeitsfilter 70 verstärkt. Der Flachdichtring 63 mit der integrierten Dichtlippe 72 ist dabei nach Art eines Formdichtringes ausgebildet.

Selbstverständlich sind an den gezeigten Ausführungsformen Änderungen möglich, ohne vom Gedanken der Erfindung abzuweichen. So können die verschiedenen Mittel zum Abdichten des inneren und des äußeren Papprohres auch in anderer Weise miteinander kombiniert oder mehrfach angeordnet werden. Die Bauart mit dem kurzen Außenrohr kann auch bei den Flüssigkeitsfiltern nach Figur 3 und Figur 4 angewandt werden.

## Patentansprüche

1. Flüssigkeitsfilter mit einem in einem Gehäuse (11) austauschbar angeordneten Filterelement (33, 53), das zwischen einen Zulaufanschluß (18) und einen Ablaufanschluß (19) geschaltet ist und dessen Gehäuse (11) aus einem die Anschlüsse (18, 19) aufweisenden Deckel (13, 61, 71) und einem das Filterelement (33, 53) aufnehmenden, becherförmigen Gehäuseteil (12, 51) besteht, die durch eine Befestigungseinrichtung (17) lösbar miteinander verbunden sind und mit einer den Innenraum des Gehäuses (11) nach außen abgrenzenden Gehäusedichtung (26) zwischen Gehäuseteil (12, 51) und Deckel (13, 61, 71) und bei dem das Filterelement (33, 53) ein axial durchströmter Wickel ist, bei dem eine Filtermaterialbahn spiralig um ein Mittelrohr (34) gewickelt ist, das mit einem rohrförmigen Ende (36) den Wickel überragt und mit dem Deckel (13) eine erste innere Dichtstelle (37) zwischen Schmutz- und Reinseite bildet, dadurch gekennzeichnet, daß das Filterelement (33, 53) an seinem äußeren Umfang ein Außenrohr (38, 54) aus flüssigkeitsundurchlässigem Material aufweist, das mit dem Wickel des Filterelements (33, 53) dicht und fest verbunden ist, daß das Außenrohr (38, 54) ein sich in Richtung des Deckels (13, 61, 71) erstreckendes, überstehendes rohrförmiges Ende (41) aufweist, welches Ende (41) in einen zwischen dem Gehäuseteil (12, 41) und dem Deckel (13, 61, 71) ausgebildeten, sich in axialer Richtung erstreckenden Ringspalt (28) ragt, wo es im Bereich der Gehäusedichtung (22) eine zweite im Innenraum (21) des Gehäuses (11) liegende Dichtstelle (42) zwischen Schmutz- (18) und Reinseite (19) bildet.

2. Flüssigkeitsfilter nach Anspruch 1, dadurch gekennzeichnet, daß das Mittelrohr (34) und das Außenrohr (38; 54) aus Papiermaterial, insbesondere Papier, Pappe, Karton besteht.

3. Flüssigkeitsfilter nach Anspruch 1 oder 2, dadurch gekennzeichnet, daß das Mittelrohr (34) und das Außenrohr (38; 54) jeweils über eine Klebestelle (35; 39; 55) aus Heißschmelzkleber mit dem Wickel fest und dicht verbunden sind.

4. Flüssigkeitsfilter nach einem der Ansprüche 1 bis 3, dadurch gekennzeichnet, daß zur Bildung der Gehäuseabdichtung (22) im Deckel (13; 61; 71) eine Ringnut (25) angeordnet ist, die mindestens von einem inneren kreisförmig verlaufenden Steg (24) begrenzt wird und die einen Flachdichtring (26) aufnimmt, an dem ein Rand (27) des Gehäuseteils (12; 51) anliegt.

5. Flüssigkeitsfilter nach einem oder mehreren der Ansprüche 1 bis 4, dadurch gekennzeichnet, daß das Ende (41) des Außenrohrs (38; 54) in einem konisch ausgebildeten Ringspalt (28) im Bereich des Deckels (13) dicht eingespannt ist.

6. Flüssigkeitsfilter nach Anspruch 5, dadurch gekennzeichnet, daß der konische Ringspalt (28) von dem Rand (27) des Gehäuseteils (12; 51) und dem ringförmigen, vom Deckel (13) in axialer Richtung auskragenden inneren Steg (24) gebildet wird.

7. Flüssigkeitsfilter nach einem oder mehreren der Ansprüche 1 bis 4, dadurch gekennzeichnet, daß der Rand (27) des Gehäuseteils (15) und das Ende (41) des Außenrohrs (38) zueinander parallel verlaufen und sich gemeinsam am Flachdichtring (26; 63) dichtend abstützen.

8. Flüssigkeitsfilter nach Anspruch 7, dadurch gekennzeichnet daß der Flachdichtring (63) eine sich axial erstreckende, ringförmige Dichtlippe (72) aufweist, die das Ende (41) des Außenrohrs (38) umgreift und zwischen Außenrohr (38) und innerem Steg (24) des Deckels (71) liegt.

9. Flüssigkeitsfilter nach einem oder mehreren der vorausgehenden Ansprüche, dadurch gekennzeichnet, daß das Ende (36) des Mittelrohrs (34) in einem kreisförmig verlaufenden, konisch ausgebildeten Dekkelspalt (31) dicht eingespannt ist.

10. Flüssigkeitsfilter nach Anspruch 9, dadurch gekennzeichnet, daß am Deckel (71) zusätzlich ein das Mittelrohr (34) an einem Ende (36) radial abdichtender O-Ring (62) angeordnet ist.

11. Flüssigkeitsfilter nach einem oder mehreren der Ansprüche 1 bis 4, 7, 8 dadurch gekennzeichnet, daß der Rand (27) des Gehäuseteils (15) koaxial zu den Enden (41, 36) des Außenrohrs (38) und des Mittelrohrs (34) verläuft und daß die Gehäuseabdichtung (22) und die zweite äußere Dichtstelle (42) am Flachdichtring (63) ausgebildet sind, während die innere, erste Dichtstelle (37) als ein radial wirkender O-Ring (62) zwischen Mittelrohr (34) und Deckel (61) ausgebildet ist.

12. Flüssigkeitsfilter nach einem oder mehreren der Ansprüche 1 bis 11, dadurch gekennzeichnet, daß das Mittelrohr (34) und das Außenrohr (38) in axialer Richtung im wesentlichen gleich lang ausgebildet sind.

13. Flüssigkeitsfilter nach einem oder mehreren der Ansprüche 1 bis 11, dadurch gekennzeichnet, daß das Außenrohr (54) in axialer Richtung wesentlich kürzer als das Mittelrohr (34) ausgebildet ist und es sich mit seinem zum überstehenden Ende (41) entgegengesetzt liegenden Ende auf einem ringförmig umlaufenden Absatz (52) des becherförmigen Gehäuseteils (51) abstützt.

14. Flüssigkeitsfilter nach Anspruch 13, dadurch gekennzeichnet, daß die überstehenden rohrförmigen Enden (41, 36) von kurzem Außenrohr (54) und Mittelrohr (34) im wesentlichen gleich lang sind.

15. Flüssigkeitsfilter nach Anspruch 13 oder 14, dadurch gekennzeichnet, daß die das Außenrohr (54) mit dem Wickel verbindende Klebestelle (55) an der Mantelfläche des Wickels und nahe an der dem Deckel (13) zugewandten Stirnseite angeordnet ist.

16. Flüssigkeitsfilter nach einem der Ansprüche 1 bis 15, dadurch gekennzeichnet, daß die Gehäuseabdichtung (22) und die beiden inneren Dichtstellen (37; 42) im wesentlichen in der gleichen radialen Ebene liegen.

17. Flüssigkeitsfilter nach einem der Ansprüche 1 bis 16, dadurch gekennzeichnet, daß am Boden (15) des Gehäusedeckels (12) eine Gewindebuchse (16) befestigt ist, in die eine den Deckel (13) durchgreifende Zentralschraube (17) ragt.

## Claims

1. Liquid filter having a filter element (33, 53) disposed exchangeably in a housing (11), which filter element is connected between an inflow port (18) and an outflow port (19) and the housing (11) of which comprises a cover (13, 61, 71) having the ports (18, 19) and a bucket-shaped housing part (12, 51) receiving the filter element (33, 53), which are detachably interconnected by a fastening device (17) and are connected to a housing seal (26), demarcating the interior of the housing (11) in the outward direction, between the housing part (12, 51) and the cover (13, 61, 71), and in which the filter element (33, 53) is an axially flowed-through winding, in which a filter material strip is wound spirally around a middle tube (34), which juts with a tubular end (36) over the winding and forms with the cover (13) a first, inner sealing joint (37) between the dirty side and clean side, characterized in that the filter element (33, 53) has on its outer periphery an outer tube (38, 54) made from liquid-impermeable material, which is connected in seal-tight and fixed arrangement to the winding of the filter element (33, 53), in that the outer tube (38, 54) has a protruding, tubular end (41) extending in the direction of the cover (13, 61, 71), which end (41) juts into an annular gap (28) configured between the housing part (12, 41) and the cover (13, 61, 71) and extending in the axial direction, where it forms, in the region of the housing seal (22), a second sealing joint (42), situated in the interior (21) of the housing (11), between the dirty side (18) and the clean side (19).

2. Liquid filter according to Claim 1, characterized in that the middle tube (34) and the outer tube (38; 54) consist of paper material, especially paper, board, card.

3. Liquid filter according to Claim 1 or 2, characterized in that the middle tube (34) and the outer tube (38; 54) are respectively connected to the winding, in a fixed and seal-tight arrangement, by an adhesive joint (35; 39; 55) composed of hot-melt adhesive.

4. Liquid filter according to one of Claims 1 to 3, characterized in that, for the formation of the housing seal (22), there is disposed in the cover (13; 61; 71) an annular groove (25) which is limited at least by an inner, circular-running web (24) and receives a flat sealing ring (26), against which bears a rim (27) of the housing part (12; 51).

5. Liquid filter according to one or more of Claims 1 to 4, characterized in that the end (41) of the outer tube (38; 54) is clamped in seal-tight arrangement in a conically configured annular gap (28) in the region of the cover (13).

6. Liquid filter according to Claim 5, characterized in that the conical annular gap (28) is formed by the rim (27) of the housing part (12; 51) and the annular, inner web (24) projecting from the cover (13) in the axial direction.

7. Liquid filter according to one or more of Claims 1 to 4, characterized in that the rim (27) of the housing part (15) and the end (41) of the outer tube (38) run parallel to each other and are jointly supported, in seal-forming arrangement, against the flat sealing ring (26; 63).

8. Liquid filter according to Claim 7, characterized in that the flat sealing ring (63) has an axially extending, annular sealing lip (72), which embraces the end (41) of the outer tube (38) and lies between the outer tube (38) and inner web (24) of the cover (71).

9. Liquid filter according to one or more of the preceding claims, characterized in that the end (36) of the middle tube (34) is clamped in seal-tight arrangement in a circular-running, conically configured cover gap (31).

10. Liquid filter according to Claim 9, characterized in that on the cover (71) there is additionally disposed an O-ring (62), which radially seals the middle tube (34) at one end (36).

11. Liquid filter according to one or more of Claims 1 to 4, 7, 8, characterized in that the rim (27) of the housing part (15) runs coaxially to the ends (41, 36) of the outer tube (38) and of the middle tube (34), and in that the housing seal (22) and the second, outer sealing joint (42) are configured on the flat sealing ring (63), whilst the inner, first sealing joint (37) is configured as a radially acting O-ring (62) between the middle tube (34) and cover (61).

12. Liquid filter according to one or more of Claims 1 to 11, characterized in that the middle tube (34) and the outer tube (38) are configured such that they are essentially equal in length in the axial direction.

13. Liquid filter according to one or more of Claims 1 to 11, characterized in that the outer tube (54) is configured to be far shorter in the axial direction than the middle tube (34) and is supported with its end lying opposite the protruding end (41) on an annularly skirting offset (52) of the bucket-shaped housing part (51).

14. Liquid filter according to Claim 13, characterized in that the protruding tubular ends (41, 36) of the short outer tube (54) and middle tube (34) are essentially equal in length.

15. Liquid filter according to Claim 13 or 14, characterized in that the adhesive joint (55) connecting the outer tube (54) to the winding is disposed on the contacting surface of the winding and close to the end face facing the cover (13).

16. Liquid filter according to one of Claims 1 to 15, characterized in that the housing seal (22) and the two inner sealing joints (37; 42) lie essentially in the same radial plane.

17. Liquid filter according to one of Claims 1 to 16, characterized in that to the bottom (15) of the housing cover (12) there is fastened a threaded bush (16), into which a central screw (17) passing through the cover (13) juts.

## Revendications

1. Filtre à liquides avec un élément filtrant (33, 53) remplaçable disposé dans un carter (11) et qui est monté entre un raccordement d'arrivée (18) et un raccordement de sortie (19), tandis que son carter (11) est constitué d'un couvercle (13, 61, 71) comportant les raccordements (18, 19) et d'une partie en forme de godet (12, 51) recevant l'élément filtrant (33, 53), et qui est reliée de façon amovible au couvercle par un dispositif de fixation (17), et avec entre la partie (12, 51) du carter et le couvercle (13, 61, 71), un joint d'étanchéité (26) délimitant vers l'extérieur l'espace interne du carter (11), tandis que l'élément filtrant (33, 53) est un enroulement parcouru axialement par le liquide, et dans lequel une bande de matériau filtrant est enroulée en spirale autour d'un tube médian (34), dont une extrémité tubulaire (36) dépasse en hauteur l'enroulement et forme avec le couvercle (13) une première zone d'étanchéité interne (37) entre le côté encrassé et le côté propre,
filtre à liquides caractérisé en ce que l'élément filtrant (33, 53) comporte à sa périphérie externe un tube externe (38, 54) en un matériau imperméable aux liquides, qui est relié de façon étanche et inamovible à l'enroulement de l'élément filtrant (33, 53), en ce que ce tube externe (38, 54) comporte une extrémité tubulaire (41) s'étendant en direction du couvercle (13, 61, 71) et faisant saillie en hauteur, cette extrémité (41) pénétrant dans une fente annulaire (28), ménagée entre la partie (12, 41) du carter et le couvercle (13, 61, 71) et s'étendant en direction axiale, où elle forme au voisinage du joint d'étanchéité (22) du carter une deuxième zone d'étanchéité (42) se situant dans l'espace interne (21) du carter (11) entre le côté encrassé (18) et le côté propre.

2. Filtre à liquides selon la revendication 1, caractérisé en ce que le tube médian (34) et le tube externe (38, 54) sont constitués notamment de papier, de carton-pâte ou de carton.

3. Filtre à liquides selon la revendication 1 ou la revendication 2, caractérisé en ce que le tube médian (34) et le tube externe (38, 54) sont respectivement reliés de façon étanche et inamovible à l'enroulement par l'intermédiaire d'une zone de collage (35;39;55) en colle fondue.

4. Filtre à liquides selon une des revendications 1 à 3, caractérisé en ce que pour la formation du joint d'étanchéité (22) du carter, une gorge annulaire (25) est aménagée dans le couvercle (13;61;71), gorge qui est au moins délimitée par une nervure interne (24) s'étendant en forme de cercle et qui reçoit un anneau d'étanchéité plat sur lequel s'applique un bord (27) de la partie (12, 51) du carter.

5. Filtre à liquides selon une ou plusieurs des revendications 1 à 4, caractérisé en ce que l'extrémité (41) du tube externe (38, 54) est encastrée de façon étanche dans une fente annulaire (28) de forme conique au voisinage du couvercle (13).

6. Filtre à liquides selon la revendication 5, caractérisé en ce que la fente annulaire conique (28) est formée par le bord (27) de la partie (12, 51) du carter et par la nervure interne (24) de forme annulaire faisant saillie en direction axiale à partir du couvercle (13).

7. Filtre à liquides selon une ou plusieurs des revendications 1 à 4, caractérisé en ce que le bord (27) de la partie (15) du carter et l'extrémité (41) du tube externe (38) s'étendent parallèlement l'un par rapport à l'autre et prennent appui en commun de façon étanche sur l'anneau d'étanchéité plat (26, 63).

8. Filtre à liquides selon la revendication 7, caractérisé en ce que l'anneau d'étanchéité plat (63) comporte une lèvre d'étanchéité annulaire (72) s'étendant axialement, qui entoure l'extrémité (41) du tube externe (38) et se situe entre le tube externe (38) et la nervure interne (24) du couvercle (71).

9. Filtre à liquides selon une ou plusieurs des revendications précédentes, caractérisé en ce que l'extrémité (36) du tube médian (34) est encastrée de façon étanche dans une fente (31) du couvercle, fente de forme conique et s'étendant en forme de cercle.

10. Filtre à liquides selon la revendication 9, caractérisé en ce que sur le couvercle (71) est en outre disposé un anneau torique (62) étanchant radialement à une extrémité (36) le tube médian (34).

11. Filtre à liquides selon une ou plusieurs des revendications 1 à 4, 7, 8, caractérisé en ce que le bord (27) de la partie (15) du carter s'étend coaxialement par rapport aux extrémités (41, 36) du tube externe (38) et du tube médian (34), et en ce que l'étanchement (22) du carter et la deuxième zone d'étanchéité externe (42) sont réalisés sur l'anneau d'étanchéité plat (63), tandis que la première zone d'étanchéité interne (37) est réalisée sous la forme d'un anneau torique (62) agissant radialement entre le tube médian (34) et le couvercle (61).

12. Filtre à liquides selon une ou plusieurs des revendications 1 à 11, caractérisé en ce que le tube médian (34) et le tube externe (38) ont essentiellement la même longueur en direction axiale.

13. Filtre à liquides selon une ou plusieurs des revendications 1 à 11, caractérisé en ce que le tube externe (54) est notablement plus court en direction axiale que le tube médian (34) et qu'il prend appui, avec son extrémité se situant à l'opposé de son extrémité (41) placée au-dessus, sur un gradin annulaire périphérique (52) de la partie en forme de godet (51) du carter.

14. Filtre à liquides selon la revendication 13, caractérisé en ce que les extrémités tubulaires en saillie (41, 36) du tube externe court (54) et du tube médian (34) sont essentiellement de même longueur.

15. Filtre à liquides selon la revendication 13 ou la revendication 14, caractérisé en ce que la zone de collage (55) reliant le tube externe (54) avec l'enroulement est disposée sur la surface latérale de l'enroulement et au voisinage de la surface frontale tournée vers le couvercle (13).

16. Filtre à liquides selon une des revendications 1 à 15, caractérisé en ce que l'étanchement (22) du carter et les deux zones d'étanchéité internes (37, 42) se situent essentiellement dans le même plan radial.

17. Filtre à liquides selon une des revendications 1 à 16, caractérisé en ce qu'au fond (15) de la partie (12) du carter est fixée une douille filetée (16) dans laquelle pénètre une vis centrale (17) passant à travers le couvercle (13).
